# EUROPEAN PATENT APPLICATION

(11) **EP 1 777 453 A2**
(43) Date of publication of application: **25.04.2007**
(21) Application number: 06255315.1
(22) Date of filing: 16.10.2006
(51) Int. Cl.: F16M 11/00

(54) **Display device**

(30) Priority: 20.10.2005 JP 2005305202
(71) Applicant: ORION ELECTRIC CO., Ltd., Fukui 915-8555 (JP)
(72) Inventor: Uchizono, Tatsuya, I.P.Dept., Echizen-city, Fukui 915-8555 (JP); Tajima, Koichi, I.P.Dept., Echizen-city, Fukui 915-8555 (JP)
(74) Representative: Paget, Hugh Charles Edward

(57) **Abstract**

To make it possible to change a mounting angle of a display section with respect to a stand section and reliably keep the angle of the display section without being changed with the own weight. A fixed section 13A made up of an inclined plane 14A inclined backward, a fixed section 13B made up of an inclined plane 14B inclined forward and a horizontal fixed section 13C located on the same plane as that of a fixed plate 10 are formed in the fixed plate 10 which is to be fixed to a stand section 7 for supporting a display section 1. A mounting angle of the display section 1 is changed with respect to the stand section 7 by selectively fixing legs 5 to any one of these fixed sections 13A to 13C.

## Description

### BACKGROUND OF THE INVENTION

### Field of the Invention

The present invention relates to a display device provided with a display section having a display surface such as a liquid crystal panel and a stand section which supports this display section, and more particularly, to a display device which can change an angle of mounting the display section on the stand section.

### Description of the Related Art

A display device using a thin flat panel such as PDP (Plasma Display Panel), for example, a liquid crystal panel is becoming widespread as a display device for a television receiver or personal computer in recent years. Such a display device using a liquid crystal panel is provided with a stand for supporting the display section. Various types of structures are conventionally proposed for such a display device provided with a stand and, for example, Japanese Patent Laid-Open Publication No. 7-56516 (Patent Document 1) proposes a freestanding display device which constructs a display section by covering a liquid crystal panel with a front cabinet and back cabinet, provides a stand which supports this display section with a bracket that fixes the display section and attaches the stand column to this bracket in a freely pivotable manner so as to make the mounting angle of the display section variable. Furthermore, Japanese Patent Laid-Open Publication No. 11-258580 (Patent Document 2) discloses a liquid crystal display monitor which attaches a stand column to a stand section in a freely pivotable manner as in the case of Patent Document 1 and also provides locking means for keeping an angle of the display section at a bottom plate of the stand.

The display device which attaches the display section to the stand section in a pivotable manner as in the case of Patent Documents 1, 2, can freely change the angle of the display section with respect to the stand section, but the weight of the display section tends to increase with upsizing of the display plane in recent years and the structure as described in Patent Document 1 with the display section simply attached to the stand section in an inclinable manner causes the display section to incline downward with its own weight, causing the mounting angle of the display section set according to the user' s preferences to go out of order. In this respect, in the liquid crystal display monitor described in Patent Document 2, it is possible to stably keep the mounting angle of the display section by supporting the display section using the locking means provided on the stand section, but the structure is complicated and the structure of supporting the large screen display section using the locking means as described above causes the weight of the display section to be locally concentrated, which makes it difficult for the locking means to support the heavy display section, leaving a problem that it is difficult to stably support the display section.

### SUMMARY OF THE INVENTION

The present invention is implemented in view of the above described problems and it is an object of the present invention to provide a display device capable of changing the inclination of a display section according to the user's preferences and stably keeping the angle of the display section.

The display device according to aspect 1 of the present invention is a display device comprising a display section, a front side of which is used as a display plane, legs vertically provided beneath the display section and a stand section which supports the legs, wherein the stand section comprises a fixed plate and a cover which covers the fixed plate and fixes the fixed plate, and the fixed plate is provided with a plurality of fixed sections which fix the legs and make a mounting angle of the display section variable with respect to at least the stand section.

The configuration according to aspect 1 selectively fixes the legs of the display section to any one of the plurality of fixed sections formed in the fixed plate, and can thereby change an angle of the display section according to the fixed section.

The display device according to aspect 2 of the present invention is the display device according to aspect 1, wherein the fixed section comprises an inclined plane which causes the display section to incline forward or backward with respect to the stand section and a horizontal fixed section which places the display plane in an upright position with respect to the stand section, the inclined planes and horizontal fixed section are arranged in parallel on the fixed plate, and the legs are selectively fixed to any one of the horizontal fixed section and the inclined planes according to the mounting angle of the display section.

According to the configuration of aspect 2, if the legs are fixed to the horizontal fixed section, the display section is placed in an upright position with respect to the stand section and if the legs are fixed to the backward inclined planes, the display section is inclined backward with respect to the stand section with the inclination of the inclined planes. Furthermore, if the legs are fixed to the forward inclined planes, the display section is inclined forward with respect to the stand section with the inclination of the inclined planes.

The display device according to aspect 3 of the present invention is the display device according to aspect 1, wherein the fixed section comprises a plurality of inclined substrates which cause the display section to incline forward or backward with respect to the stand section and a horizontal substrate which places the display plane in an upright position with respect to the stand section, the inclined substrates and horizontal substrate can be mounted on the fixed plate in a freely detachable manner, and any one of the inclined substrates and horizontal substrate is fixed to the fixed plate according to the mounting angle of the display section.

According to the configuration of aspect 3, when the horizontal substrate is mounted on the fixed plate, if the legs are fixed to the horizontal substrate, the display section is placed in an upright position with respect to the stand section and if the backward inclined substrate is mounted, the display section is inclined backward with respect to the stand section with the inclination of the inclined planes. Furthermore, if the forward inclined substrate is mounted, the display section is inclined forward with respect to the stand section with the inclination of the inclined planes.

The display device according to aspect 4 of the present invention is the display device according to aspect 1, wherein a plurality of fixed plates having the horizontal fixed section provided with inclined planes which cause the display section to incline forward or backward as one piece with respect to the stand section and a flat fixed plate which places the display plane in an upright position with respect to the stand section are molded individually and the respective fixed plates are fixed to the cover according to the mounting angle of the display section.

According to the configuration of aspect 4, if the flat fixed plate is fixed to the cover and the legs are fixed to the horizontal fixed section of the fixed plate, the display section is placed in an upright position with respect to the stand section and if the fixed plate with the backward inclined plane formed as one piece is fixed, the display section is inclined backward with respect to the stand section with the inclination of the inclined planes. Furthermore, if the fixed plate with the forward inclined plane formed as one piece is fixed, the display section is inclined forward with respect to the stand section with the inclination of the inclined planes.

According to the display device of a first aspect of the present invention, it is possible to easily change the mounting angle of the display section with respect to the stand section according to the angle of the fixed section and extremely stably support the legs by directly fixing the legs to the fixed plate without the angle of the display plane being changed by the own weight of the display section.

According to the display device of a second aspect of the present invention, it is possible to selectively fix the display section with respect to the fixed plate at any one of mounting angles of backward inclination, forward inclination and upright position.

According to the display device of a third aspect of the present invention, it is possible to fix the legs of the display section to any one of the horizontal substrate fixed to the fixed plate, backward inclined substrate and forward inclined substrate and make variable the mounting angle of the display section.

According to the display device of a fourth aspect of the present invention, it is possible to fix the legs of the display section to any one of the flat fixed plate having the horizontal fixed section fixed to the cover, fixed plate with the backward inclined plane formed as one piece and fixed plate with the forward inclined plane formed as one piece and make variable the mounting angle of the display section.

### BRIEF DESCRIPTION OF THE DRAWINGS

FIG. 1 is a perspective view of a display device showing Embodiment 1 of the present invention viewed from front;
FIG. 2 is a perspective view of the display device according to Embodiment 1 of the present invention viewed from back;
FIG. 3 is a perspective view of the fixed plate according to Embodiment 1 of the present invention;
FIG. 4 is a cross-sectional view of the display section according to Embodiment 1 of the present invention before being mounted;
FIG. 5 is diagrams showing the display section according to Embodiment 1 of the present invention placed in an upright position; FIG. 5A shows a cross-sectional view and FIG. 5B shows a bottom view;
FIG. 6 is diagrams showing the display section according to Embodiment 1 of the present invention inclined backward; FIG. 6A shows a cross-sectional view and FIG. 6B shows a bottom view;
FIG. 7 is diagrams showing the display section according to Embodiment 1 of the present invention inclined forward; FIG. 7A shows a cross-sectional view and FIG. 7B shows a bottom view;
FIG. 8 is exploded perspective views of a fixed plate, horizontal substrate and inclined substrates showing Embodiment 2 of the present invention;
FIG. 9 is perspective views of a fixed plate showing Embodiment 3 of the present invention; and
FIG. 10 is a perspective view showing a modified embodiment of the fixed plate of the present invention.

### DETAILED DESCRIPTION OF THE PREFERRED EMBODIMENTS

Hereinafter, the best modes of implementing the present invention will be explained with reference to the attached drawings. It goes without saying that the present invention is also easily applicable to cases other than those explained in the embodiments within a range without departing from the essence of the present invention.

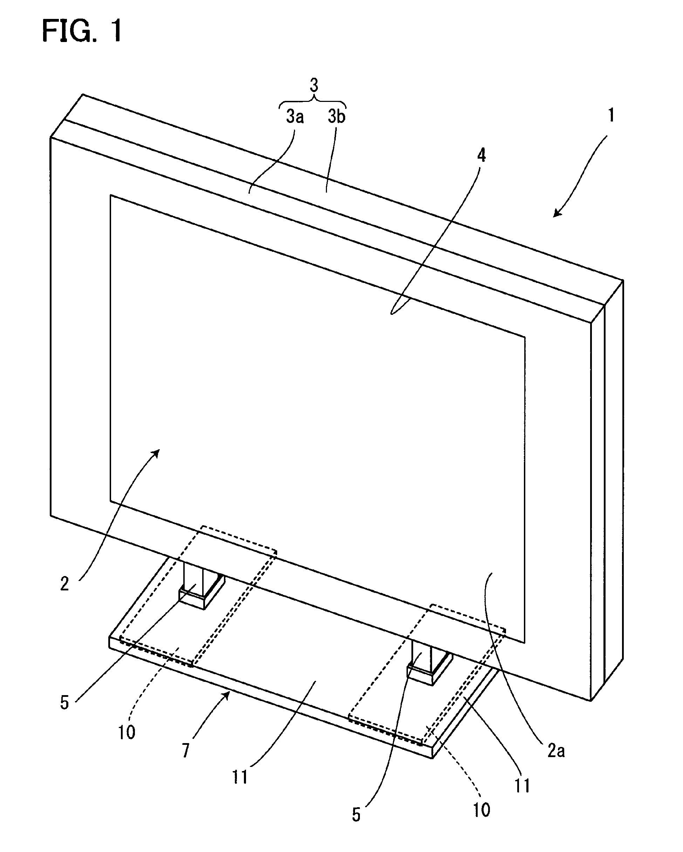

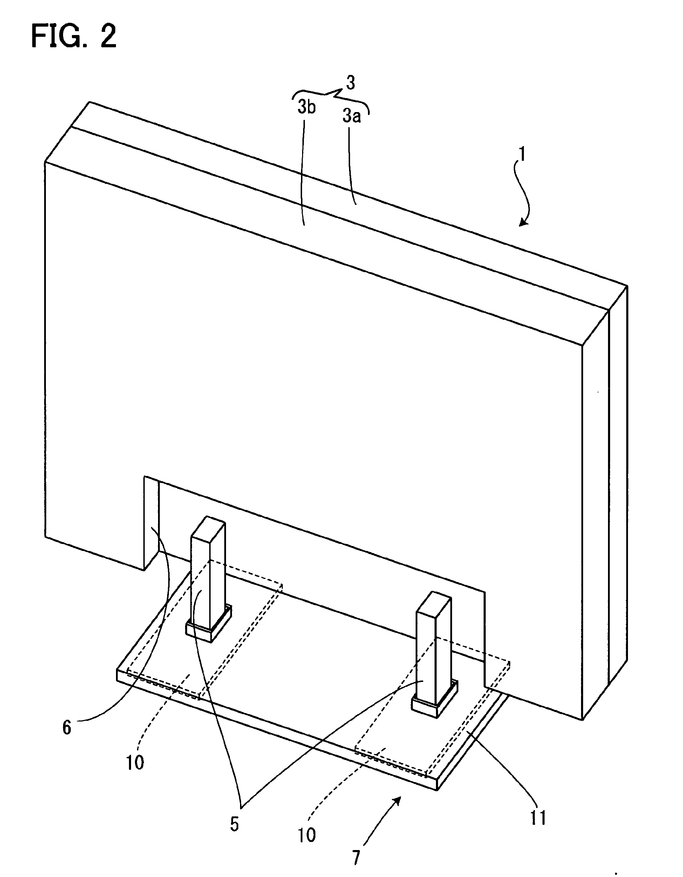

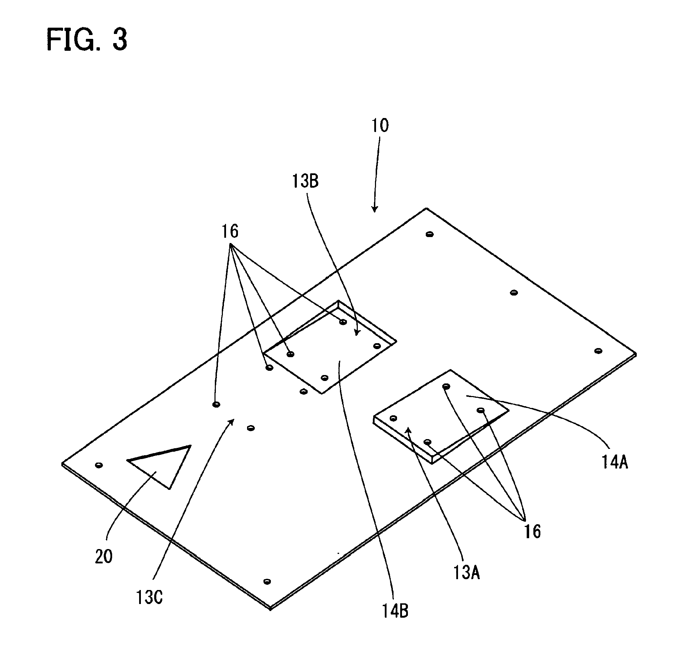

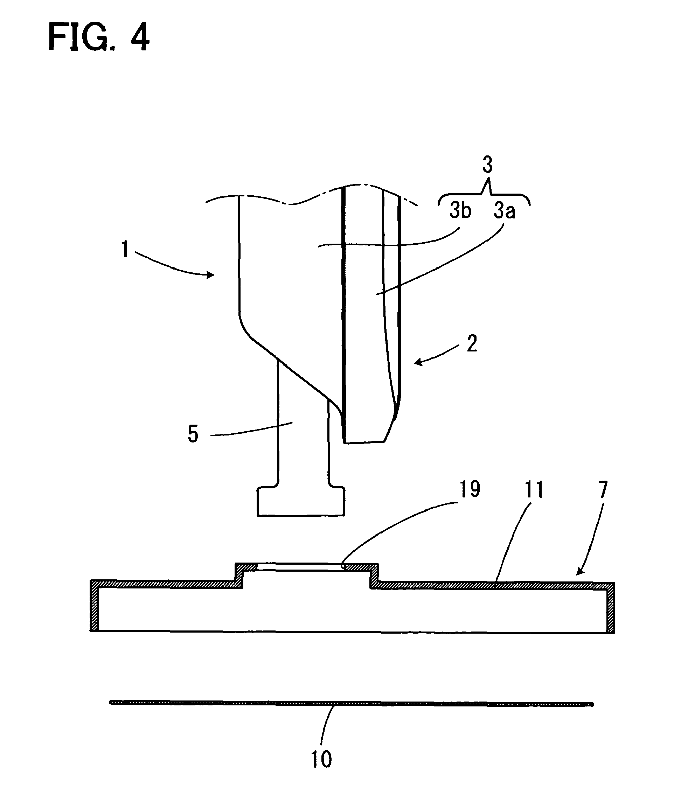

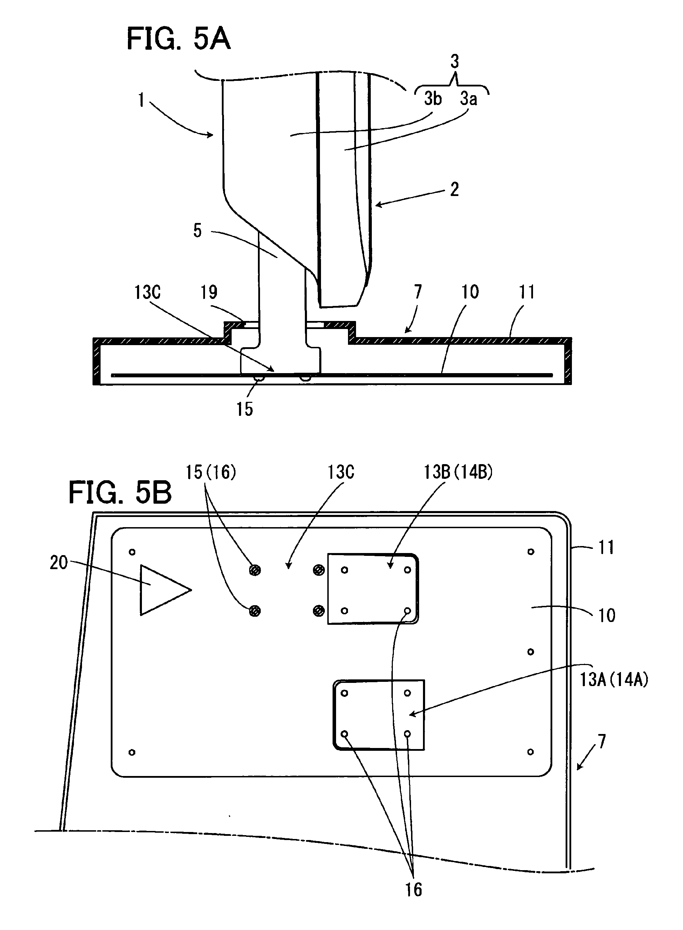

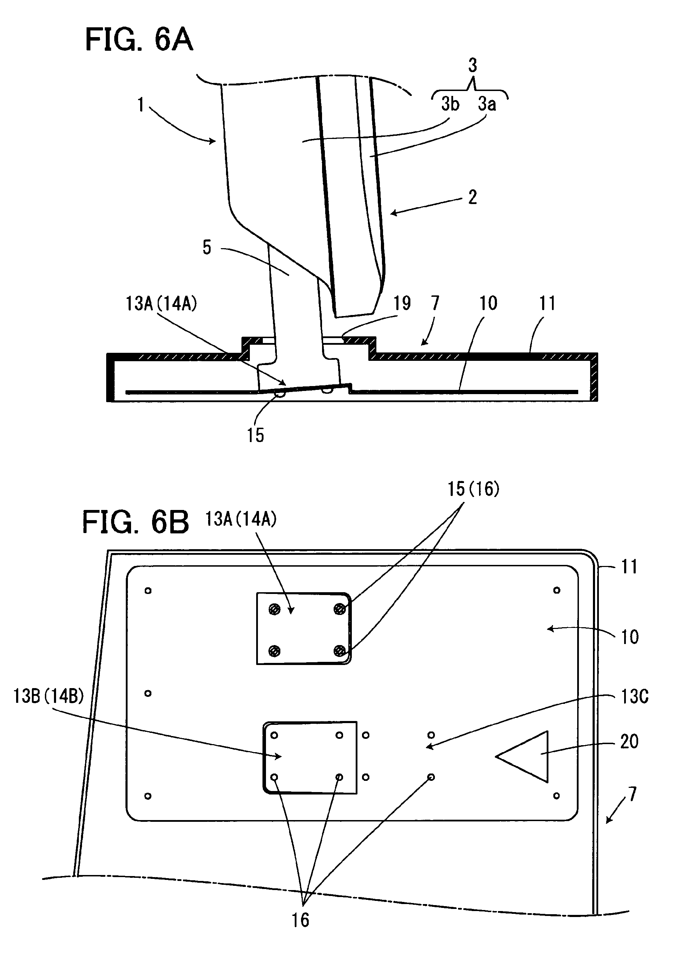

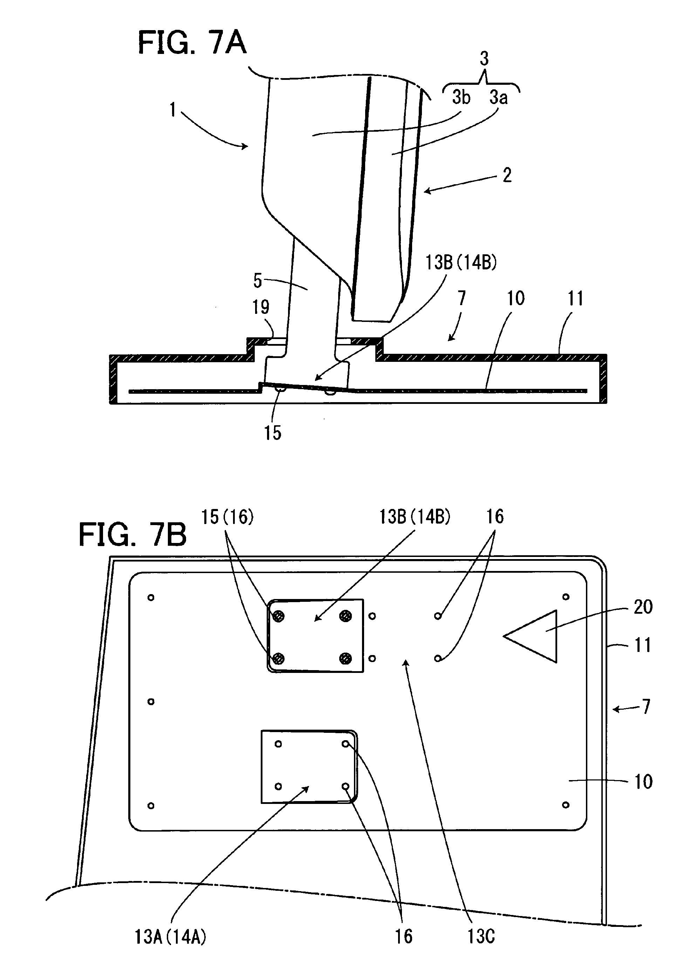

FIG. 1 to FIG. 6 show Embodiment 1 of the present invention; FIG. 1 is a perspective view of a display device viewed from the front, FIG. 2 is a perspective view of the display device viewed from the back, FIG. 3 is a perspective view of the fixed plate, FIG. 4 is a cross sectional view showing the display section before being mounted, FIG. 5 to FIG. 7 show the display section with its mounting angle changed; FIG. 5 shows a case where the display section is mounted in an upright position, FIG. 6 shows a case where the display section is inclined backward and FIG. 7 shows a case where the display section is inclined forward. In the figures, reference numeral 1 denotes a display section, which is constructed of a liquid crystal panel 2 and a cabinet 3 which houses this liquid crystal panel 2. The cabinet 3 is divided into front and rear portions; a front cabinet 3a and a rear cabinet 3b, the front cabinet 3a is provided with a display window 4 which exposes a display plane 2a of the liquid crystal panel 2 and a stepped section 6 for attaching a pair of left and right legs 5 is formed below the rear cabinet 3b.

A stand section 7 which supports the display section 1 is made up of metallic flat fixed plates 10 for fixing the legs 5 and a cover 11 which covers these fixed plates 10. The fixed plate 10 is provided with a fixed section 13A which causes the display section 1 to incline backward with respect to the stand section 7, a fixed section 13B which causes the display section 1 to incline forward and a horizontal fixed section 13C which keeps the display section 1 in an upright position with respect to the stand section 7 and selectively fixing the legs 5 to any one of these fixed sections 13A to 13C allows the mounting angle of the display section 1 to be changed with respect to the stand section 7. Reference numeral 19 in the figure denotes a through hole formed in the cover 11 for letting the legs 5 pass and reference numeral 20 denotes a checking recess for identifying the front or back of the fixed plate 10.

Next, the fixed sections 13A to 13C will be explained. For the fixed plate 10, the fixed sections 13A, 13B are molded through press work or the like. The fixed section 13A is made up of an inclined plane 14A which is made to protrude from the fixed plate 10 and incline backward, while the fixed section 13B is made up of an inclined plane 14B which is recessed forward from the fixed plate 10 and inclined. Furthermore, the horizontal fixed section 13C is positioned on the same plane as that of the fixed plate 10. Insertion holes 16 are formed as fixing means for letting screws 15 pass on these fixed sections 13A to 13C, the screws 15 are inserted into the insertion holes 16 from the bottom of the fixed plate 10, the screws 15 are screwed into the legs 5 and then the fixed plate 10 is fixed horizontally to the cover 11. In this way, the display section 1 is fixed to the stand section 7. At this time, if the legs 5 are fixed to the horizontal fixed sections 13C as shown in FIG. 5A, the display section 1 is kept in an upright position with respect to the stand section 7. Furthermore, if the legs 5 are fixed to the inclined planes 14A of the fixed sections 13A as shown in FIG. 6A, the display section 1 is inclined backward with respect to the stand section 7 due to the inclination of the inclined planes 14A and if the legs 5 are fixed to the inclined planes 14B of the fixed sections 13B as shown in FIG. 7A, the display section 1 is inclined forward with respect to the stand section 7 due to the inclination of the inclined planes 14B. When the display section 1 is fixed to the stand section 7 in an upright position, the position of the horizontal fixed section 13C is substantially in the center of the cover 11 as shown in FIG. 5B. When the display section 1 is fixed inclined backward, the fixed plate 10 to be fixed to the cover 11 is rotated clockwise from the state in FIG. 5A and the inclined plane 14A is located substantially in the center of the cover 11 and fixed as shown in FIG. 6B. Furthermore, when the display section 1 is fixed inclined forward, the fixed plate 10 is turned over from the state in FIG. 6B and the inclined plane 14B is located substantially in the center of the cover 11 and fixed as shown in FIG. 7B. At this time, it is possible to easily check the orientation of the fixed plate 10 to be fixed to the cover 11 through the checking recess 20 formed in the fixed plate 10.

As shown above, according to this embodiment, the fixed section 13A made up of the inclined plane 14A inclined backward, the fixed section 13B made up of the inclined plane 14B inclined forward, and the horizontal fixed section 13C are formed on the same plane as that of the fixed plate 10, the legs 5 are selectively fixed to any one of these fixed sections 13A to 13C and it is thereby possible to easily change the mounting angle of the display section 1 with respect to the stand section 7. Furthermore, it is possible to support the display section 1 in an extremely stable manner by directly fixing the legs 5 to the fixed plate 10 using a screw 15. Therefore, even when the weight of the display section 1 is increased with upsizing of the display section 1, there is no possibility that the angle of the display section 1 with respect to the stand section 7 may be changed by its own weight and it is possible to keep the angle of the display section 1 in an extremely stable condition. Moreover, the simple structure with two inclined planes 14A, 14B and horizontal fixed section 13C formed on the fixed plate 10 through press work or the like allows the manufacturing cost to be reduced. Furthermore, this embodiment forms the checking recess 20 in the fixed plate 10 as a guide to locate the positions at which the fixed sections 13A to 13C are formed with respect to the stand section 7 when the fixed plate 10 is fixed to the cover 11, which facilitates the attachment of the fixed plate to the cover 11.

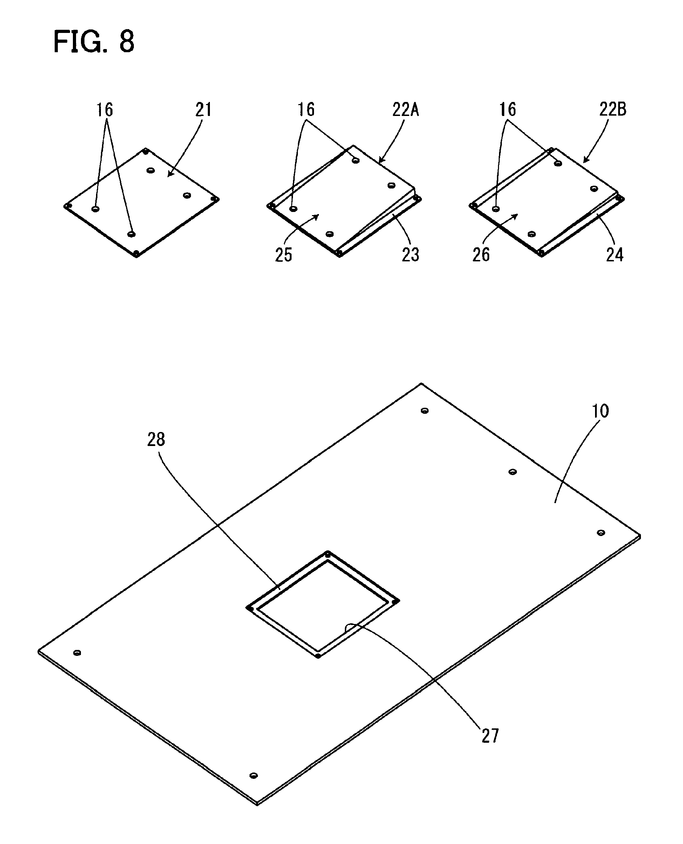

FIG. 8 shows exploded perspective views of a fixed plate and horizontal substrate and inclined substrate according to a second embodiment of the present invention and parts having the same functions as those in the aforementioned first embodiment are assigned the same reference numerals, explanations of overlapping parts are omitted and only different parts will be explained.

Embodiment 1 described above has shown an example where the fixed plate 10 is rotated or turned over and the fixed sections 13A to 13C are arranged at predetermined positions of the cover 11, while this embodiment will explain, as shown in FIG. 8, a case where a horizontal substrate 21 and two inclined substrates 22A, 22B of different angles of inclination are molded and those three types of substrates 21, 22A and 22B are mounted on a fixed plate 10 according to the mounting angle of a display section 1 in a freely detachable manner. The inclined substrates 22A, 22B are constructed of inclined planes 25, 26 corresponding to the mounting angle of the display section 1 formed in mounting seats 23, 24 respectively as a single piece and the horizontal substrate 21 has a flat rectangular shape having the same dimensions as the mounting seats 23, 24. An opening 27 is formed at the mounting position of the fixed plate 10 for fixing these substrates 21, 22A and 22B and a stepped recess 28 is formed one step lower which is located around the edges of the opening 27 and engages with the horizontal substrate 21, inclined substrates 22A, 22B. Note that the angle of inclination of the inclined plane 25 of the one inclined substrate 22A is set to be greater than that of the inclined plane 26 of the other inclined substrate 22B.

In this embodiment configured as shown above, to place the display section 1 in an upright position with respect to a stand section 7, the horizontal substrate 21 is mounted in the stepped recess 28 of the fixed plate 10 and a leg 5 is fixed to the horizontal substrate 21. On the other hand, when the display section 1 is placed inclined forward with respect to the stand section 7, any one of the mounting seats 23, 24 of the inclined substrates 22A, 22B is mounted in the stepped recess 28 of the fixed plate 10 and screwed therein. That is, when a greater angle is to be set as the angle of the display section 1, the inclined substrate 22A is fixed to the fixed plate 10 and the leg 5 is fixed to the inclined plane 25 thereof and when a smaller angle is to be set as the angle of the display section 1, the inclined substrate 22B of a moderate angle is fixed to the fixed plate 10 and the leg 5 is fixed to the inclined plane 26. Furthermore, when the display section 1 is inclined backward with respect to the stand section 7, the inclined substrate 22A or inclined substrate 22B fixed to the fixed plate 10 is rotated or turned over and the leg 5 is fixed to any one of the inclined planes 25, 26.

As shown above, in this embodiment, the horizontal substrate 21, inclined substrates 22A, 22B to be fixed to the fixed plate 10 in a freely detachable manner are formed and any one of the horizontal substrate 21, inclined substrates 22A, 22B is fixed to the fixed plate 10, and it is thereby possible, as in the case of the first embodiment, to cause the horizontal substrate 21 or inclined substrates 22A, 22B selectively mounted on the fixed plate 10 to change the mounting angle of the display section 1.

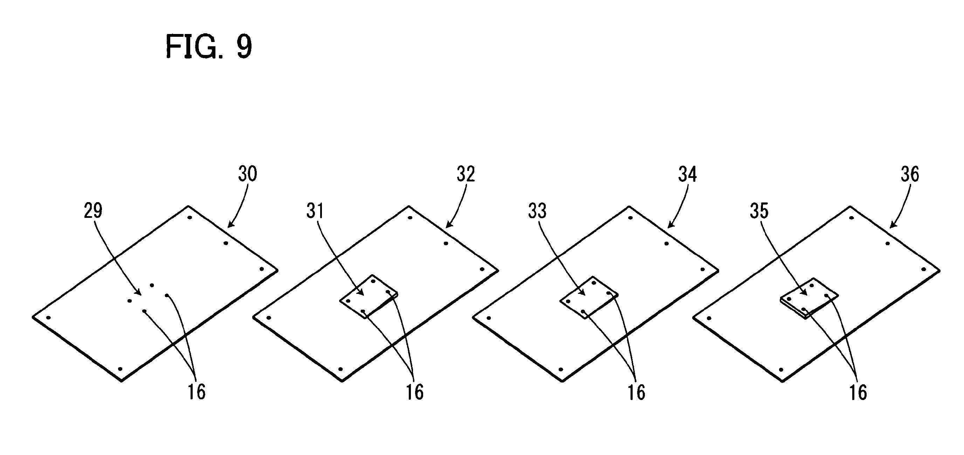

FIG. 9 shows perspective views of a fixed plate according to a third embodiment of the present invention and parts having the same functions as those in the foregoing embodiments are assigned the same reference numerals, explanations of overlapping parts will be omitted and only different parts will be explained.

The above described second embodiment has shown the example where the horizontal substrate 21, inclined substrates 22A, 22B are formed according to the mounting angle of the display section 1 with respect to the common fixed plate 10 and each substrate is fixed to the fixed plate 10. In this embodiment, four types of fixed plates 30, 32, 34, 36 are individually formed; a flat fixed plate 30 having a horizontal fixed section 29, a fixed plate 32 in which an inclined plane 31 inclined backward is formed as one piece, a fixed plate 34 in which an inclined plane 33 of a smaller inclination than the inclined plane 31 of the fixed plate 32 is formed as one piece and a fixed plate 36 in which an inclined plane 35 inclined forward is formed. By forming such four types of fixed plates 30, 32, 34, 36, selectively fixing one of them to a cover 11 and fixing a leg 5 of the display section 1 to any one of the horizontal fixed section 29 and inclined planes 31, 33, 35 formed in the fixed plates 30, 32, 34, 36, it is possible to change the mounting angle of the display section 1 as in the cases of the foregoing embodiments.

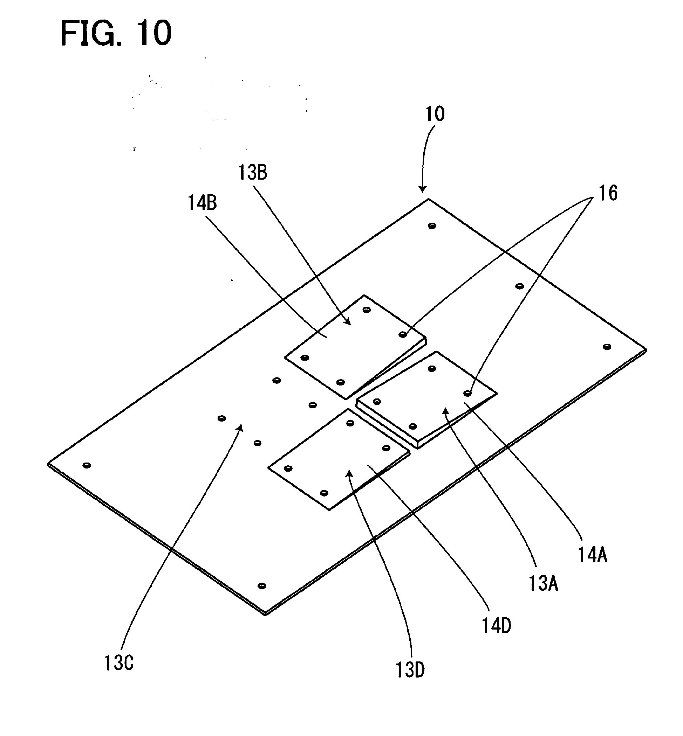

The embodiments of the present invention have been explained in detail so far, but the present invention is not limited to the foregoing embodiments and can be implemented modified in various ways within a range not departing from the essence of the present invention. For example, the above described first embodiment has shown the example where the fixed section 13A made up of the inclined plane 14A of backward inclination, fixed section 13B made up of the inclined plane 14B of forward inclination and horizontal fixed section 13C are formed in the fixed plate 10, but, for example, as shown in FIG. 10, it is also possible to further form a fixed section 13D having an inclined plane 14D in addition to these inclined planes 14A, 14B and horizontal fixed section 13C and change the angle of the display section.

## Claims

1. A display device comprising:
a display section, a front side of which is used as a display plane;
legs vertically provided beneath the display section; and
a stand section which supports the legs,
wherein the stand section comprises a fixed plate and a cover which covers the fixed plate and fixes the fixed plate, and
the fixed plate is provided with at least a plurality of fixed sections which fix the legs and make a mounting angle of the display section variable with respect to the stand section.

2. The display device according to claim 1, wherein the fixed section comprises an inclined plane which causes the display section to incline forward or backward with respect to the stand section and a horizontal fixed section which places the display plane in an upright position with respect to the stand section,
the inclined planes and the horizontal fixed section are arranged in parallel on the fixed plate, and
the legs are selectively fixed to any one of the horizontal fixed section and the inclined planes according to the mounting angle of the display section.

3. The display device according to claim 1, wherein the fixed section comprises a plurality of inclined substrates which cause the display section to incline forward or backward with respect to the stand section and a horizontal substrate which places the display plane in an upright position with respect to the stand section,
the inclined substrates and horizontal substrate can be mounted on the fixed plate in a freely detachable manner, and
any one of the inclined substrates and horizontal substrate is fixed to the fixed plate according to the mounting angle of the display section.

4. The display device according to claim 1, wherein a plurality of fixed plates provided with inclined planes which cause the display section to incline forward or backward as one piece with respect to the stand section and a flat fixed plate which places the display plane in an upright position with respect to the stand section molded individually and the respective fixed plates are fixed to the cover according to the mounting angle of the display section.
